# EUROPEAN PATENT APPLICATION

(11) **EP 2 590 059 A2**
(43) Date of publication of application: **08.05.2013**
(21) Application number: 12162295.5
(22) Date of filing: 29.03.2012
(51) Int. Cl.: G06F 3/0354, G06F 3/042

(54) **Method and system for recognizing touch point, and display apparatus**

(30) Priority: 04.11.2011 KR 20110114658
(71) Applicant: Samsung Electronics Co., Ltd., Suwon-si, Gyeonggi-do, 443-742 (KR)
(72) Inventor: Choi, Hyun-mook, Seoul (KR); Lee, Hee-won, Gyeonggi-do (KR); Choi, Kyoung-oh, Seoul (KR); Han, Young-ran, Gyeonggi-do (KR)
(74) Representative: Robinson, Ian Michael

(57) **Abstract**

A method and a system for recognizing a touch point, and a display apparatus are provided. The method for recognizing the touch point includes emitting, by the display apparatus, an infrared ray (IR) signal to pass through a liquid crystal display (LCD) panel, the LCD panel including regions, each region having a different pattern; photographing, by the digital pen using an IR camera, a pattern through which the IR signal passes at a touch point on the display apparatus that is touched by the digital pen, obtaining an IR image corresponding to the touch point; and recognizing, by the digital pen, the touch point using the IR image.

## Description

### CROSS-REFERENCE TO RELATED APPLICATION

This application claims priority from Korean Patent Application No. 10-2011-0114658, filed on November 4, 2011 in the Korean Intellectual Property Office.

### BACKGROUND

### 1. Field

Methods, systems, and apparatuses consistent with exemplary embodiments relate to recognizing a touch point and, more particularly, to a method, a system, and a display apparatus for recognizing a touch point using a digital pen.

### 2. Description of the Related Art

A relationship between a touch screen and a digital pen may be determined using various methods, such as using a camera, infrared-ray (IR), resistance, capacitance, etc.

In a case of using IR to determine the relationship, an IR light source and an IR camera are provided at the digital pen. However, when the IR light source is provided at the digital pen, battery consumption increases due to the presence of the IR light source. Also, an angle of the pen is limited in order for the IR camera of the pen to recognize the light reflected from the light source again. Also, the thickness of the digital pen increases.

### SUMMARY

According to the present invention there is provided an apparatus and method as set forth in the appended claims. Other features of the invention will be apparent from the dependent claims, and the description which follows. One or more exemplary embodiments may address the above disadvantages and other disadvantages not described above. However, it is understood that one or more exemplary embodiment are not required to overcome the disadvantages described above, and may not overcome any of the disadvantages described above.

One or more exemplary embodiments provide a method and a system for recognizing a touch point, and a display apparatus, which recognize a touch point with an IR light source provided in the display apparatus.

According to an aspect of an exemplary embodiment, there is provided a method for recognizing a touch point of a touch system which includes a display apparatus and a digital pen, the method including emitting, by the display apparatus, an infrared ray (IR) signal to pass through a liquid crystal display (LCD) panel, the LCD panel including a plurality of regions, each region having a different pattern; photographing, by the digital pen using an IR camera, a pattern through which the IR signal passes at a touch point on the display apparatus that is touched by the digital pen; obtaining an IR image corresponding to the touch point; and recognizing, by the digital pen, the touch point using the IR image.

The emitting may include sensing, by the digital pen, a touch start in which the digital pen starts touching the display apparatus and, if the touch start is sensed, transmitting, by the digital pen, a sensing signal to the display apparatus, and, if the sensing signal is received, driving, by the display apparatus, an IR light source to emit the IR signal.

A pressure sensor may be provided on a portion of the digital pen for touching the LCD panel, and the sensing may include sensing, by the digital pen, the touch start using the pressure sensor.

The sensing may include sensing the touch start if pressure is sensed by the pressure sensor for a threshold amount of time.

A button may be provided on the display apparatus or the digital pen, and the emitting may include, if the button is selected, emitting the IR signal.

The method may further include sensing, by the digital pen, a touch end in which the digital pen stops touching the display apparatus, and if the touch end is sensed, transmitting, by the digital pen, a stop signal to the display apparatus, and, if the stop signal is received, stopping, by the display apparatus, driving an IR light source to stop emitting the IR signal.

A pressure sensor may be provided on a portion of the digital pen for touching the LCD panel, and the sensing may include, if pressure is not sensed by the pressure sensor for a threshold amount of time, sensing the touch end.

According to an aspect of another exemplary embodiment, there is provided a touch system including a display apparatus which emits an IR signal to pass through an LCD panel, the LCD panel including a plurality of regions, each region having a different pattern; and a digital pen which photographs, using an IR camera, a pattern through which the IR signal passes at a touch point on the display apparatus that is touched by the digital pen, obtains an IR image corresponding to the touch point, and recognizes the touch point using the IR image.

The display apparatus may comprise an IR light source, and if a touch start at a touch point on the display apparatus that is touched by the digital pen is sensed by the digital pen and a sensing signal is transmitted, the display apparatus may drive the IR light source and emits the IR signal.

The digital pen may comprise a pressure sensor provided on a portion of the digital pen for touching the LCD panel, and the touch start may be sensed by the pressure sensor.

If pressure is sensed by the pressure sensor for a threshold amount of time, the touch start may be sensed.

A button may be provided on the display apparatus or the digital pen, and if the button is selected, the display apparatus may emit the IR signal.

The display apparatus may comprise an IR light source that generates the IR signal, and if a touch end in which the digital pen stops touching the display apparatus is sensed by the digital pen and a stop signal is transmitted, the display apparatus may stop driving an IR light source to stop emitting the IR signal.

The digital pen may comprise a pressure sensor, and if pressure is not sensed by the pressure sensor for a threshold amount of time, the digital pen may sense the touch end.

According to another aspect of an exemplary embodiment, there is provided a display apparatus which recognizes touch of a user using a digital pen, the display apparatus including a liquid crystal display (LCD) panel comprising a plurality of regions, each region having a different pattern; a backlight unit which is disposed on a lower portion of the LCD panel and provides a backlight to the LCD panel; an IR light source which emits an IR signal to pass through the LCD panel; a communication unit which communicates with the digital pen; and a controller which controls the LCD panel, the backlight unit, and the IR light source using a signal received from the digital pen.

The IR light source may be disposed on the backlight unit.

The IR light source may comprise a plurality of IR light sources, and the IR light sources may be arranged along an edge area on a surface of the backlight unit at a predetermined distance from each other.

The IR light source may comprise a plurality of IR light sources, and the IR light sources may be arranged along an edge area and an inner area on a surface of the backlight unit in a predetermined pattern.

The display apparatus may further include a diffusion panel which is provided on an upper surface of the backlight unit, and the IR light source may be disposed on a side surface of the LCD panel and may emit the IR signal toward the diffusion panel. The diffusion panel may reflect the IR signal so that the IR signal passes through the LCD panel.

If a sensing signal is received from the digital pen through the communication unit, the controller may control the IR light source to emit the IR signal, and, if a stop signal is received from the digital pen through the communication unit, the controller may control the IR light source to stop emitting the IR signal.

### BRIEF DESCRIPTION OF THE DRAWING

The above and/or other aspects will be more apparent by describing in detail exemplary embodiments, with reference to the accompanying drawings, in which:

FIG. 1 is a view illustrating a touch system according to an exemplary embodiment;

FIG. 2 is a block diagram illustrating a display apparatus according to an exemplary embodiment;

FIG. 3 is a view illustrating a pattern provided in a liquid crystal display (LCD) panel of the display apparatus according to an exemplary embodiment;

FIGS. 4A and 4B are views illustrating infrared-ray (IR) light sources arranged in a backlight unit according to various exemplary embodiments;

FIG. 5A and 5B are views illustrating an IR light source disposed on a side surface of the LCD panel according to an exemplary embodiment;

FIG. 6 is a block diagram illustrating a digital pen according to an exemplary embodiment; and

FIG. 7 and 8 are flowcharts illustrating a method for recognizing a touch point according to an exemplary embodiment.

### DETAILED DESCRIPTION OF EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail since they would obscure the exemplary embodiments with unnecessary detail.

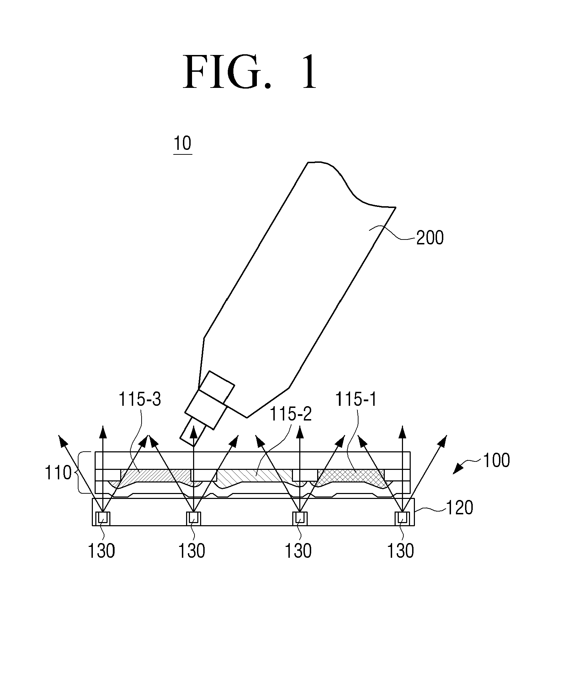

FIG. 1 is a view illustrating a touch system 10 according to an exemplary embodiment. As shown in FIG. 1, the touch system 10 includes a display apparatus 100 and a digital pen 200. The display apparatus 100 may be realized by an electronic board. However, this should not be considered as limiting. The display apparatus 100 may be realized by an electronic apparatus such as a television, a tablet PC, and a smart phone.

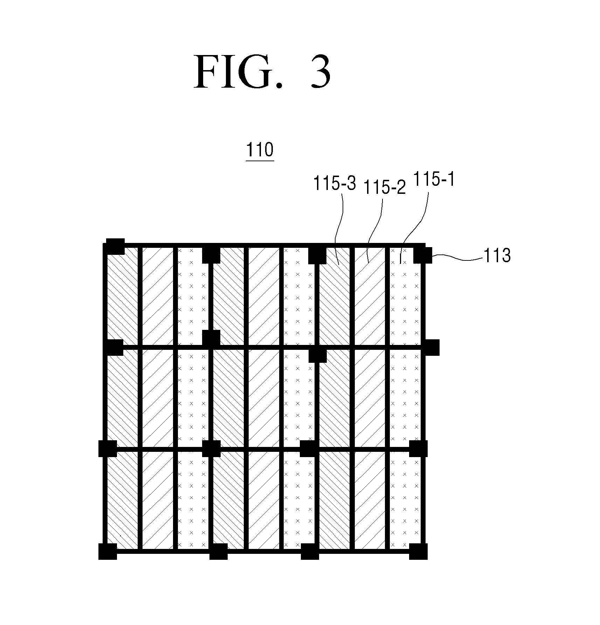

The display apparatus 100 includes a backlight unit 120 and a liquid crystal display (LCD) panel 110 to display an image. A different pattern 115-1, 115-2, 115-3 is inserted into each region of the LCD panel 110 of the display apparatus 100. (See also FIG. 3). Accordingly, the digital pen 200 photographs a region through which an infrared-ray (IR) signal passes among the regions of the different patterns, thereby recognizing a touch point.

Also, the display apparatus 100 includes an IR light source 130 that emits an IR signal to pass through the LCD panel 110 having a different pattern for each region. It should be noted that, while a plurality of light sources 130 are shown in the figures, any number of light sources 130 may be provided, including only one light source 130, as long as the IR signal may be emitted so as to pass through the LCD panel 110. The IR light source 130 may be arranged on at least one of an edge area and an inner area of the backlight unit 120 of the display apparatus 100 at a predetermined distance from another one. Alternatively, the IR light source 130 may be disposed only on a side surface of the LCD panel 110. However, this is merely an example and the IR light source may be disposed in a different position.

The display apparatus 100 may drive the IR light source 130 to emit the IR signal if a first threshold condition is satisfied. For example, if a sensing signal that is generated by sensing a touch start (i.e., a time at which the digital pen 200 starts touching the display apparatus 100) by a pressure sensor of the digital pen 200 is received, the display apparatus 100 drives the IR light source 130 to emit the IR signal. For another example, a button may be provided on the digital pen 200 or the display apparatus 100, and if the button is selected, the display apparatus 100 may drive the IR light source 130 to emit the IR signal. In this case, the button might be considered a start button. However, this is merely an example and the IR light source 130 may be driven according to a different condition. In some exemplary embodiments, the display apparatus 100 only drives the IR light source 130 to emit the IR signal if the predetermined condition is satisfied.

Moreover, if a second threshold condition is satisfied, the display apparatus 100 may stop driving the IR light source 130. For example, if a stop signal that is generated by sensing a touch end (i.e., a time at which the digital pen 200 stops touching the display apparatus 100) by the digital pen 200 is received, the display apparatus 100 may stop driving the IR light source 130. For another example, if the button provided on the digital pen 200 or the display apparatus 100 as discussed above is deselected, the display apparatus 100 may stop driving the IR light source 130. Alternatively, an end button may be provided on the digital pen 200 or on the display apparatus 100, and if the end button is selected, the display apparatus 100 may stop driving the IR light source 130.

Also, the display apparatus 100 may display an object using information on the touch point received from the digital pen 200.

The digital pen 200 photographs a pattern region through which the IR signal passes out of the LCD panel 110 of the display apparatus 100 using an IR camera. The digital pen 200 generates an IR image based on the photographed pattern region and then recognizes a touch point using the generated IR image.

The digital pen 200 transmits the information on the recognized touch point to the display apparatus 100 or to an external control apparatus controlling the display apparatus 100. Accordingly, the display apparatus 100 displays the object on the touch point recognized by the digital pen 200.

The digital pen 200 senses the touch start and generates the sensing signal so that the IR light source can be driven if the digital pen 200 touches the display apparatus 100. The digital pen 200 transmits the sensing signal to the display apparatus 100.

At this time, the digital pen 200 may sense the touch start using a pressure sensor provided on a portion of the digital pen 200 contacting the LCD panel 110 of the display apparatus 100. For example, if pressure is sensed by the pressure sensor for a threshold time, the digital pen 200 may sense the touch start. However, this is merely an example and the digital pen 200 may sense the touch start using other inputting means (for example, a button).

If the touch end is sensed, the digital pen 200 generates the stop signal. The digital pen 200 transmits the stop signal to the display apparatus 100 to stop driving the IR light source.

Alternatively, if there is no touch by the digital pen 200 for a threshold amount of time, the digital pen 200 may determine that the touch end has occurred.

As described above, since the touch system 10 includes the IR light sources 130 provided in the display apparatus 100, a battery life of the digital pen 200 can be extended and a writing angle limit of the digital pen 200 can be reduced. Also, the IR light sources 130 are controlled differently according to whether the digital pen 200 is in a touch activation state or a touch inactivation state, so that unnecessary power consumption can be reduced.

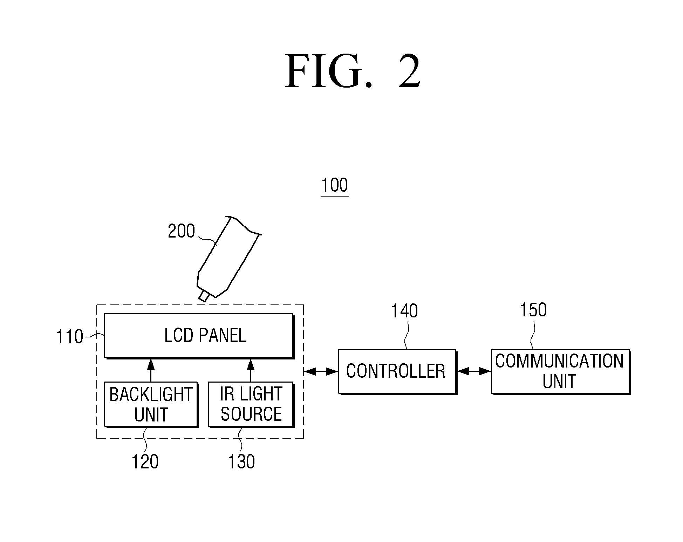

Hereinafter, the display apparatus 100 and the digital pen 200 will be explained in detail with reference to FIGS. 2 to 6.

FIG. 2 is a block diagram illustrating the display apparatus 100 according to an exemplary embodiment.

As shown in FIG. 2, the display apparatus 100 includes an LCD panel 110, a backlight unit 120, an IR light source 130, a controller 140, and a communication unit 150. As described above, the display apparatus 100 may be realized by, but is not limited to, an electronic board.

The LCD panel 110 includes two substrates facing each other and electrodes arranged in the two substrates. The LCD panel 110 is formed by injecting a liquid crystal material between the two substrates. If voltage is applied to two electrodes, an electric field is generated, moving molecules of the liquid crystal material injected between the two substrates and thus adjusting a transmissivity of a backlight. Accordingly, the LCD panel 110 is able to adjust the transmissivity of light based on an image signal.

The LCD panel 110 includes a color filter therein. As shown in FIG. 3, the color filter includes a red (R) filter 115-1, a green (G) filter 115-2, and a blue (B) filter 115-3. In particular, the RGB filters 115-1, 115-2, and 115-3 provided in the LCD panel 110 are mounted in a frame 113 which has a different pattern for each region. The IR signal passes through the frame 113 having the different pattern for each region. The digital pen 200 photographs a pattern region through which the IR signal passes, obtains an IR image, and recognizes a touch point based on the IR image. The frame 113 having the different pattern for each region may be called a black matrix. The LCD panel 110 may be realized by, but is not limited to, a touch panel.

The backlight unit 120 projects a backlight through the LCD panel 110. The LCD panel 110 cannot emit light by itself. The backlight unit 120 includes a backlight driving circuit (not shown) and a light emitting module (not shown). The light emitting module includes a plurality of light emitting elements (for example, light emitting diodes (LEDs)), which are electrically connected to one another. The backlight driving circuit may drive the light emitting module under control of the controller 140 (See FIG. 2).

The IR light source 130 emits the IR signal so that the IR camera of the digital pen 200 can photograph the pattern of the LCD panel 110. Since the IR light source 130 emits an IR signal, the IR signal does not disturb display of the backlight emitted from the backlight unit 120, that is, visible rays.

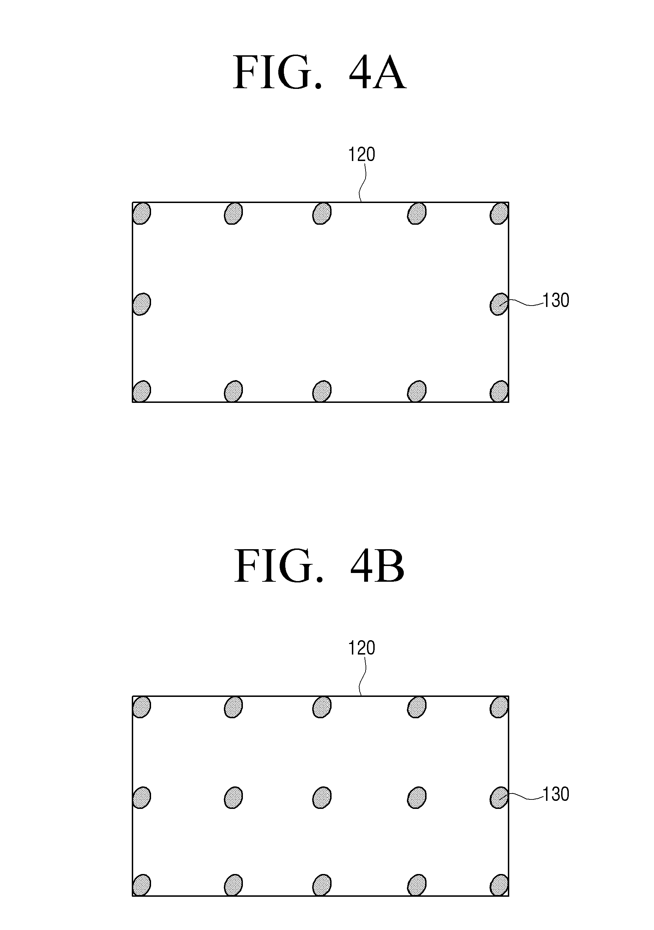

The IR light source 130 may be disposed in various positions so that the IR signal passes through the LCD panel 110. FIGS. 4A and 4B are views illustrating the IR light source 130 which is arranged on the backlight unit 120 according to exemplary embodiments. FIGS. 4A and 4B illustrate the backlight unit 120 viewed from above.

As shown in FIG. 4A, in a case in which a plurality of IR light sources 130 are provided, the IR light sources 130 may be arranged along an edge area on a surface of the backlight unit 120 at a predetermined distance from another each other. Alternatively, as shown in FIG. 4B, the IR light sources 130 may be arranged along an edge area and an inner area on the surface of the backlight unit 120 in a predetermined pattern. That is, as shown in FIGS. 4A and 4B, the IR light sources 130 may be arranged on the surface of the backlight unit 120 so that the IR light sources 130 can emit the IR signal to the LCD panel 110 directly.

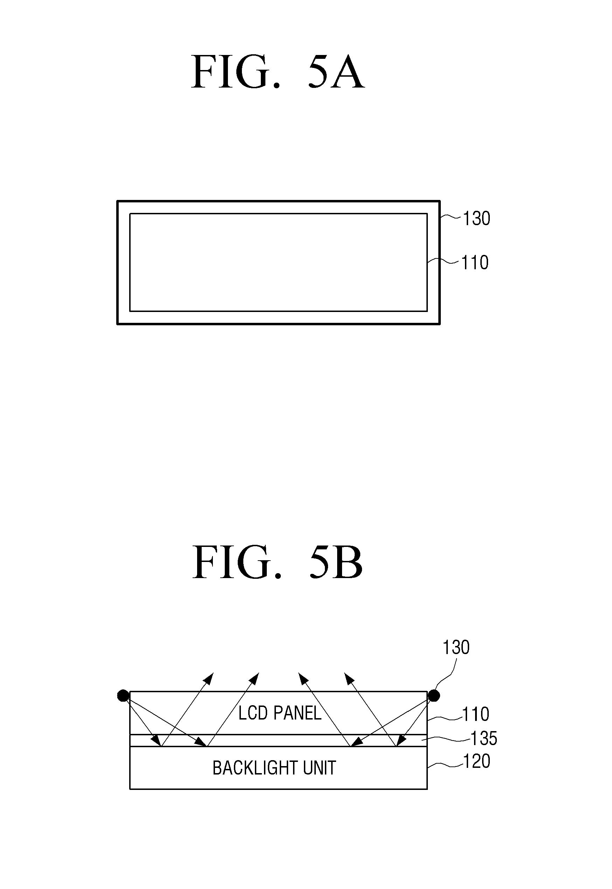

FIG. 5 is a view illustrating an IR light source which is disposed on a side surface of the LCD panel 110 according to an exemplary embodiment. In particular, FIG. 5 is a cross section view of a display panel including the LCD panel 110, the backlight unit 120, and a diffusion panel 135.

As shown in FIG. 5, the IR light source 130 is disposed on a side surface of the LCD panel 110. The IR signal emitted toward the backlight unit 120 from the IR light sources 130 is reflected toward the LCD panel 110 by the diffusion panel 135 disposed between the LCD panel 110 and the backlight unit 120.

Accordingly, the digital pen 200 photographs the pattern of the LCD panel 110 using the IR signal reflected by the diffusion panel 135.

The number and position of the IR light source 130 shown in FIGS. 1, 4A, 4B and 5 are merely an example. As discussed above, it is possible to provide only one IR light source 130, or to provide a plurality of IR light sources 130 as shown in FIGS. 1, 4A, 4B, and 5. The IR light source 130 may be disposed in any number and position as long as the IR signal can be emitted from the IR light source 130 so as to pass through the LCD panel 110.

The communication unit 150 communicates with the digital pen 200. Specifically, the communication unit 150 may receive the sensing signal or the start signal or the stop signal to determine whether to drive the IR light source 130 or not. The communication unit 150 may receive the information on the touch point from the digital pen 200.

The controller 140 controls an overall operation of the display apparatus 100 according to a user command. In particular, the controller 140 controls the LCD panel 110, the backlight unit 120, and the IR light source 130 using a signal received from the digital pen 200 through the communication unit 150.

Specifically, if the sensing signal is received from the digital pen 200 through the communication unit 150, the controller 140 drives the IR light source 130 to emit the IR signal.

If the sensing signal is not transmitted or the stop signal is received from the digital pen 200 through the communication unit 150, the controller 140 stops driving the IR light source 130 to prevent unnecessary power consumption.

If the information on the touch point touched by the digital pen 200 is received from the digital pen 200 through the communication unit 150, the controller 140 controls the LCD panel 110 and the backlight unit 120 to display an object on the touch point.

Although the controller 140 is provided in the display apparatus 100, this is merely an example. The controller 140 of the display apparatus 100 may be provided outside the display apparatus 100. For example, the controller 140 may be realized by a controller of a set-top box or a computer provided outside the display apparatus 100.

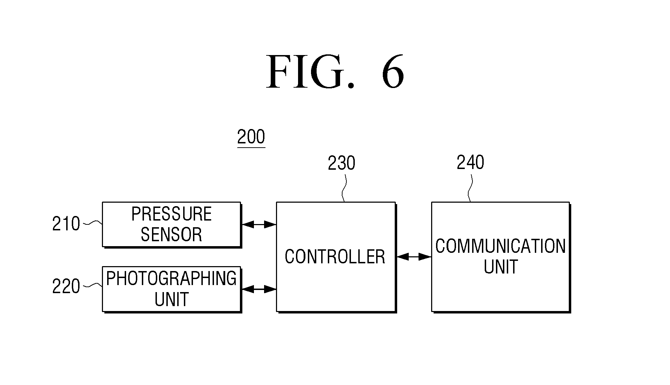

FIG. 6 is a block diagram illustrating the digital pen 200 according to an exemplary embodiment. As shown in FIG. 6, the digital pen 200 includes a pressure sensor 210, a photographing unit 220, a controller 230, and a communication unit 240.

The pressure sensor 210 is provided on a portion of the digital pen 200 where the digital pen 200 touches the display apparatus 100 (for example, at a nib of the digital pen 200), and senses whether the digital pen 200 touches the display apparatus 100 or not.

The photographing unit 220 photographs the pattern region of the LCD panel of the display apparatus 100 in the vicinity of the digital pen 200 and through which the IR signal passes. The photographing unit 220 signal-processes the photographed image, thereby generating an IR image. The photographing unit 220 transmits the generated IR image to the controller 230.

The photographing unit 220 may be realized by an IR camera.

The communication unit 240 communicates with the external display apparatus 100 or an apparatus controlling the display apparatus 100. In particular, the communication unit 240 may transmit the sensing signal or the stop signal to the display apparatus 100 or the apparatus controlling the display apparatus 100 to determine whether to drive the IR light source 130 or not. Also, the communication unit 240 may transmit the information on the touch point recognized using the IR image to the display apparatus 100 or the apparatus controlling the display apparatus 100.

The controller 230 controls an overall operation of the digital pen 200. In particular, the controller 230 determines the touch start or the touch end using the pressure sensor 210. Specifically, if pressure is sensed by the pressure sensor 210, the controller 230 determines that the touch starts. At this time, the controller 230 may determine that the touch starts at the moment the pressure is sensed by the pressure sensor 210, or alternatively, the controller 230 may determine that the touch starts if pressure is sensed by the pressure sensor 210 for a threshold amount of time. Also, the controller 230 may determine that the touch ends if the pressure is not sensed by the pressure sensor 210 for a threshold amount of time. The threshold amounts of time may be the same or different for the touch start and the touch end.

The controller 230 generates one of the sensing signal and the stop signal according to whether the touch starts or ends, and transmits one of the sensing signal and the stop signal to the display apparatus 100 or the apparatus controlling the display apparatus 100 through the communication unit 240.

The controller 230 determines the touch point by analyzing the IR image of the pattern region obtained by the IR camera. Specifically, the controller 230 searches a coordinate value corresponding to the IR image obtained by the IR camera from a storage unit (not shown) in which coordinate values are mapped onto pattern regions and are stored. The controller 230 controls to transmit information on the searched coordinate value to the display apparatus 100 or the apparatus controlling the display apparatus 100.

However, directly calculating the coordinate value by the digital pen 200 is merely an example. Alternatively, it is possible for the controller 230 of the digital pen 200 to not directly calculate the coordinate value, and instead transmit the information on the IR image to the display apparatus 100 or to the apparatus controlling the display apparatus 100 so that the display apparatus 100 or the apparatus controlling the display apparatus 100 can calculate the coordinate value of the touch point.

As described above, the digital pen 200 can recognize the touch point based on the IR signal emitted from the display apparatus 100. Accordingly, a battery life of the digital pen 200 can be extended and a writing angle limit of the digital pen 200 can be reduced. Also, the IR light source 130 is controlled according to whether the digital pen 200 is in a touch activation state or a touch inactivation state, so that unnecessary power consumption can be reduced.

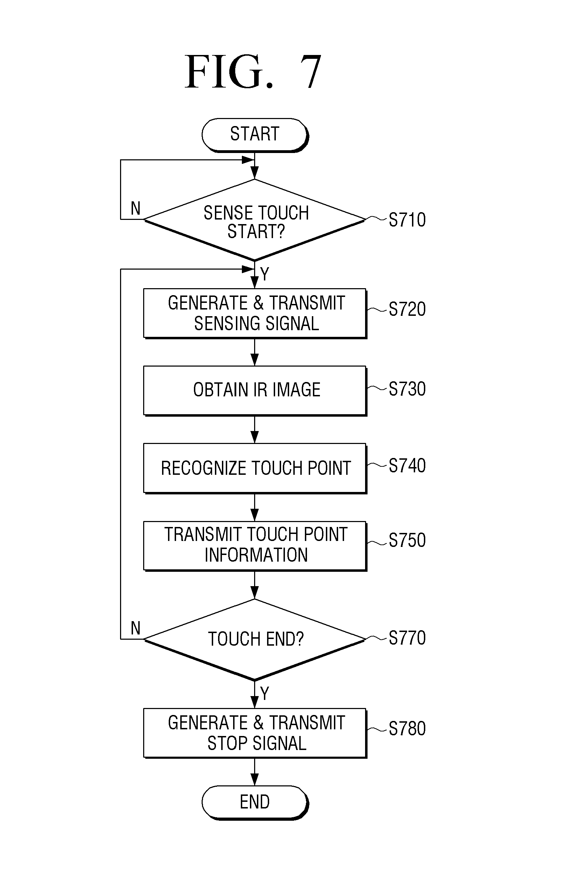

FIG. 7 is a flowchart illustrating a method performed by the digital pen for recognizing a touch point of a touch system according to an exemplary embodiment.

The digital pen 200 senses a touch start (S710). Specifically, the digital pen 200 determines whether the digital pen 200 touches the display apparatus 100 or not using the pressure sensor 210. The digital pen 200 may sense the touch start at the moment the digital pen 200 touches the display apparatus 100, or alternatively, may sense the touch start if the digital pen 200 touches the display apparatus 100 for a threshold amount of time.

If the touch start is not sensed by the digital pen 200 (S710-N), the process returns to operation S710, i.e., the digital pen 200 continues to sense the touch start. If the touch start is sensed by the digital pen 200 (S710-Y), the digital pen 200 generates a sensing signal and transmits the sensing signal to the display apparatus 100 (S720).

After generating and transmitting the sensing signal to the display apparatus 100, the digital pen 200 obtains an IR image (S730). The IR image is an image of a pattern region through which an IR signal emitted from the IR light source 130 passes.

The digital pen 200 recognizes a touch point based on the IR image (S740). Specifically, the digital pen 200 recognizes information on the touch point which is mapped onto the IR image by referring to a storage unit in which the IR images and the touch points are mapped onto each other and are stored (for example, a coordinate value of a touch point and information on a touched display). The storage unit may be provided in the digital pen 200, or may be provided at the display apparatus 100, or at a set-top box or a computer provided outside the display apparatus 100.

The digital pen 200 transmits the information on the touch point to the display apparatus 100 (S750).

The digital pen 200 determines whether the touch ends or not (S770). Specifically, the digital pen 200 determines whether there is a touch or not for a threshold amount of time. If there is no touch by the digital pen 200 for the threshold amount of time, the digital pen 200 determines that the touch ends. If it is determined that the touch ends (S770-Y), the digital pen 200 generates a stop signal and transmits the stop signal to the display apparatus 100 (S780).

If it is determined that the touch has not ended, the process returns to operation S720 and operations S720 to S760 are repeated and the object is displayed on the touch point.

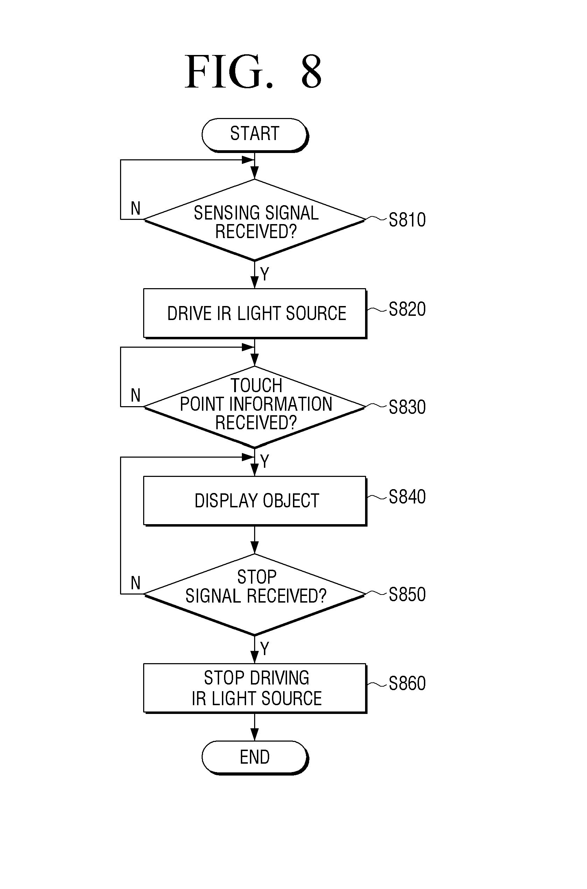

FIG. 8 is a flowchart illustrating a method performed by the display apparatus for recognizing a touch point of a touch system according to an exemplary embodiment.

The display apparatus 100 determines whether a sensing signal is received from a digital pen 200 (S810). If a sensing signal is not received (S810-N), the process returns to operation S810 and the display apparatus 100 continues to determine whether a sensing signal is received. If it is determined that the sensing signal is received from the digital pen 200 (S810-Y), the display apparatus 100 drives the IR light source 130 (S820). That is, the display apparatus 100 does not always drive the IR light source 130, but rather drives the IR light source 130 from the time when the digital pen 200 touches the display apparatus 100 so that unnecessary power consumption can be prevented.

The display apparatus 100 then determines whether touch point information is received from the digital pen 200 (S830). If touch point information is not received (S830-N), the process returns to operation S830 and the display apparatus 100 continues to wait for touch point information from the digital pen 200. If it is determined that the information on the touch point is received (S830-Y), the display apparatus 100 displays an object at the touch point (S840).

The display apparatus 100 then determines whether a stop signal is received from the digital pen 200 (S850). If it is determined that the stop signal is not received (S850-N), the process returns to operation S840. If it is determined that the stop signal is received (S850-Y), the display apparatus 100 stops driving the IR light source 130.

According to the method for recognizing the touch point as described above, a battery life of the digital pen 200 can be extended and a writing angle limit of the digital pen can be reduced. Also, the IR light source 130 is controlled according to whether the digital pen 200 is in a touch activation state or a touch inactivation state, so that unnecessary power consumption can be reduced.

Although a few preferred embodiments have been shown and described, it will be appreciated by those skilled in the art that various changes and modifications might be made without departing from the scope of the invention, as defined in the appended claims.

## Claims

1. A method for recognizing a touch point of a touch system which comprises a display apparatus (100) and a digital pen (200), the method comprising:
emitting, by the display apparatus (100), an infrared ray (IR) signal to pass through a liquid crystal display (LCD) panel (110), the LCD panel (110) generating a different pattern for each of a plurality of regions of the LCD panel (110);
photographing, by the digital pen (200), a pattern through which the IR signal passes using an IR camera and obtaining an IR image corresponding to a touch point; and
recognizing, by the digital pen (200), the touch point using the IR image.

2. The method as claimed in claim 1, wherein the emitting comprises:
sensing, by the digital pen (200), a touch start;
if the touch start is sensed, transmitting, by the digital pen (200), a sensing signal to the display apparatus (100); and
if the sensing signal is received, driving, by the display apparatus (100), an IR light source to emit the IR signal.

3. The method as claimed in claim 2, wherein the sensing comprises sensing, by the digital pen (200), the touch start using a pressure sensor which is provided on a portion of the digital pen touching the LCD panel.

4. The method as claimed in claim 3, wherein the sensing comprises sensing the touch start if pressure is sensed by the pressure sensor for a predetermined time.

5. The method as claimed in any preceding claim, wherein the emitting comprises, if a button provided on the display apparatus (100) or the digital pen (200) is selected, emitting the IR signal.

6. The method as claimed in any of claims 1 to 5, further comprising:
sensing, by the digital pen (200), a touch end;
if the touch end is sensed, transmitting, by the digital pen (200), a stop signal to the display apparatus (100); and
if the stop signal is received, stopping, by the display apparatus (100), driving an IR light source to stop emitting the IR signal.

7. The method as claimed in claim 6, wherein the sensing comprises, if pressure is not sensed by a pressure sensor which is provided on the digital pen (200) for a predetermined time, sensing the touch end.

8. A touch system, comprising:
a display apparatus (100) which emits an IR signal to pass through an LCD panel (110), the LCD panel (110) generating a different pattern for each region; and
a digital pen (200) which photographs a pattern through which the IR signal passes using an IR camera, obtains an IR image corresponding to a touch point, and recognizes the touch point using the IR image.

9. The touch system as claimed in claim 8, wherein, if a touch start is sensed by the digital pen (200) and a sensing signal is transmitted, the display apparatus (100) drives an IR light source to emit the IR signal.

10. The touch system as claimed in claim 9, wherein the touch start is sensed by a pressure sensor which is provided on a portion of the digital pen (200) that touches the LCD panel (110).

11. The touch system as claimed in claim 10, wherein, if pressure is sensed by the pressure sensor for a predetermined time, the touch start is sensed.

12. The touch system as claimed in any of claims 8 to 11, wherein, if a button provided on the display apparatus (100) or the digital pen (200) is selected, the display apparatus (100) emits the IR signal.

13. The touch system as claimed in any of claims 8 to 12, wherein, if a touch end is sensed by the digital pen (200) and a stop signal is transmitted, the display apparatus (100) stops driving an IR light source to stop emitting the IR signal.

14. The touch system as claimed in claim 13, wherein, if pressure is not sensed by a pressure sensor which is provided on the digital pen (200) for a predetermined time, the digital pen (200) senses the touch end.
